# EUROPEAN PATENT SPECIFICATION

(11) **EP 3 140 925 B1**
(45) Date of publication and mention of the grant of the patent: **07.03.2018**
(21) Application number: 15724447.6
(22) Date of filing: 07.05.2015
(51) Int. Cl.: H04B 7/06, H04W 72/04, H04W 74/08, H04W 84/12

(54) **METHODS AND APPARATUS FOR INCREASING REUSE IN WIRELESS COMMUNICATIONS**
VERFAHREN UND VORRICHTUNG ZUR ERHÖHUNG DER WIEDERVERWENDUNG IN DRAHTLOSER KOMMUNIKATION
PROCÉDÉS ET APPAREILS POUR AUGMENTER LA RÉUTILISATION DANS DES COMMUNICATIONS SANS FIL

(30) Priority: 08.05.2014 US 201461990620 P; 06.05.2015 US 201514705694
(43) Date of publication of application: 15.03.2017
(73) Proprietor: Qualcomm Incorporated, San Diego, CA 92121-1714 (US)
(72) Inventor: ZHOU, Yan, San Diego, California 92121 (US); MERLIN, Simone, San DIego, California 92121 (US)
(74) Representative: Wegner, Hans
(86) International application number: PCT/US2015/029692
(87) International publication number: WO 2015/171895

(56) References cited:
- WO-A2-2009/009538
- US-A1- 2009 019 150
- US-A1- 2012 082 109
- OSAMA BAZAN ET AL: "A Survey On MAC Protocols for Wireless Adhoc Networks with Beamforming Antennas", IEEE COMMUNICATIONS SURVEYS, IEEE, NEW YORK, NY, US, vol. 14, no. 2, 1 April 2012 (2012-04-01), pages 216-239, XP011443394, ISSN: 1553-877X, DOI: 10.1109/SURV.2011.041311.00099

## Description

### BACKGROUND

### Field

The present application relates generally to wireless communications, and more specifically to systems, methods, and devices for increasing reuse in wireless communication.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

However, multiple wireless networks may exist in the same building, in nearby buildings, and/or in the same outdoor area. The prevalence of multiple wireless networks may cause interference, reduced throughput (e.g., because each wireless network is operating in the same area and/or spectrum), and/or prevent certain devices from communicating. Thus, improved systems, methods, and devices for communicating when wireless networks are densely populated are desired.

Documents WO 2009/009538 A2 and US 2009/019150A1 relate to wireless communication within a peer-to-peer network. A protocol is described in which transmitter and/or receiver yielding is implemented.

There still exists a need to avoid interference.

The present invention provides a solution according to the subject matter of the independent claims.

### SUMMARY

Various implementations of systems, methods and devices within the scope of the appended claims each have several aspects, no single one of which is solely responsible for the desirable attributes described herein. Without limiting the scope of the appended claims, some prominent features are described herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

One aspect of the subject matter described in the disclosure provides a method for wireless communication. The method comprises receiving a first message from a first device, the first message indicating a transmission of a second message from the first device to a second device. The method further comprises receiving a third message from the second device, the third message comprising training information for determining a communication channel at the second device. The method further includes generating a beamformed message based at least in part on the training information such that the beamformed message nulls interference at the second device. The method further includes scheduling a transmission of the beamformed message to a third device concurrent with the transmission of the second message.

Another aspect of the subject matter described in the disclosure provides an apparatus for wireless communication. The apparatus comprises a receiver configured to receive a first message from a first device. The first message indicating a transmission of a second message from the first device to a second device. The receiver further configured to receive a third message from the second device. The third message comprising training information for determining a communication channel at the second device. The apparatus further includes a processor configured to generate a beamformed message based at least in part on the training information such that the beamformed message nulls interference at the second device. The processor further configured to schedule a transmission of the beamformed message to a third device concurrent with the transmission of the second message.

Another aspect of the subject matter described in the disclosure provides an apparatus for wireless communication. The apparatus comprises means for receiving a first message from a first device. The first message indicating a transmission of a second message from the first device to a second device. The apparatus further comprises means for receiving a third message from the second device. The third message comprising training information for determining a communication channel at the second device. The apparatus further comprises means for generating a beamformed message based at least in part on the training information such that the beamformed message nulls interference at the second device. The apparatus further comprises means for scheduling a transmission of the beamformed message to a third device concurrent with the transmission of the second message.

Another aspect of the subject matter described in the disclosure provides a non-transitory computer readable medium. The medium comprises instructions that when executed cause a processor to perform a method of receiving a first message from a first device, the first message indicating a transmission of a second message from the first device to a second device. The medium further comprising instructions that when executed cause a processor to perform a method of receiving a third message from the second device, the third message comprising training information for determining a communication channel at the second device. The medium further comprising instructions that when executed cause a processor to perform a method of generating a beamformed message based at least in part on the training information such that the beamformed message nulls interference at the second device. The medium further comprising instructions that when executed cause a processor to perform a method of scheduling a transmission of the beamformed message to a third device concurrent with the transmission of the second message.

### BRIEF DESCRIPTION OF THE DRAWINGS

FIG. 1 illustrates an example of a wireless communication system in which aspects of the present disclosure may be employed.
FIG. 2 illustrates a wireless communication system in which multiple wireless communication networks are present.
FIG. 3 illustrates various components that may be utilized in a wireless device that may be employed within a wireless communication system.
FIG. 4 is a sequence diagram illustrating an exchange of messages among access points (APs) and stations (STA).
FIG. 5 is a diagram illustrating exemplary transmissions in a wireless communication system in which multiple wireless devices are present.
FIG. 6 is a diagram illustrating a general multiple-input-multiple-output (MIMO) system.
FIG. 7 is a diagram illustrating exemplary transmissions in a wireless communication system in which multiple wireless devices are present.
FIG. 8 is a sequence diagram illustrating an exchange of messages among APs and STAs.
FIG. 9 is a sequence diagram illustrating an exchange of messages among APs and STAs.
FIG. 10 is a sequence diagram illustrating an exchange of messages among APs and STAs.
FIG. 11 is a sequence diagram illustrating an exchange of messages among APs and STAs.
FIG. 12 is a diagram illustrating exemplary transmissions in a wireless communication system in which multiple wireless devices are present.
FIG. 13 is a diagram illustrating exemplary transmissions in a wireless communication system in which multiple wireless devices are present.
FIG. 14 is a sequence diagram illustrating an exchange of messages among APs and STAs.
FIG. 15 is a sequence diagram illustrating an exchange of messages among APs and STAs.
FIG. 16 is a sequence diagram illustrating an exchange of messages among APs and STAs.
FIG. 17 is a sequence diagram illustrating an exchange of messages among APs and STAs.
FIG. 18 is a flow chart of an exemplary method 1800 of wireless communication, in accordance with certain embodiments described herein.

The various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, a STA may be a laptop computer, a personal digital assistant (PDA), a mobile phone, etc. In an example, an STA connects to an AP via a WiFi (e.g., IEEE 802.11 protocol) compliant wireless link to obtain general connectivity to the Internet or to other wide area networks. In some implementations an STA may also be used as an AP.

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. A TDMA system may implement GSM or some other standards known in the art. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An OFDM system may implement IEEE 802.11 or some other standards known in the art. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA. A SC-FDMA system may implement 3GPP-LTE (3rd Generation Partnership Project Long Term Evolution) or other standards.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

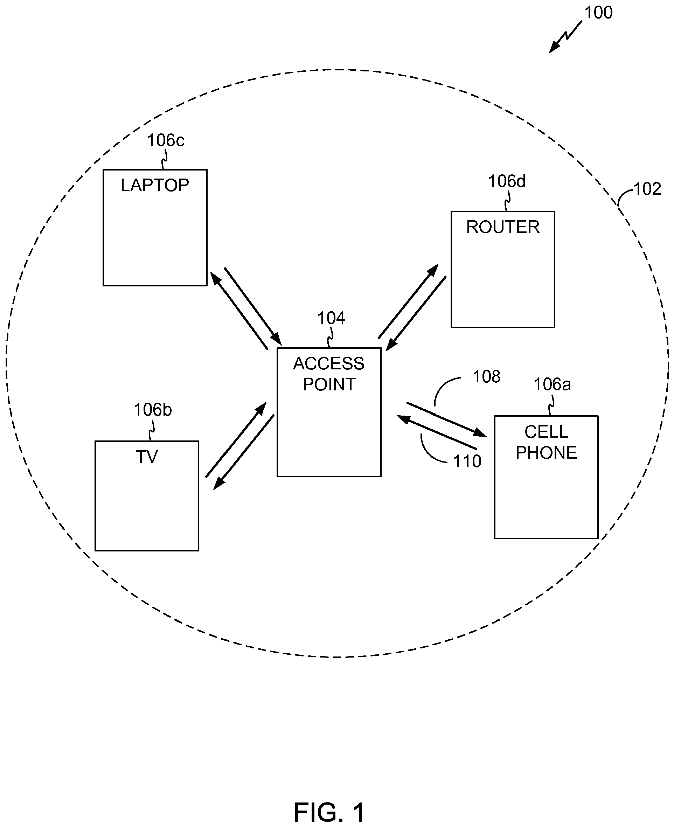

FIG. 1 is a diagram of an exemplary wireless communication system 100 in which aspects of the present disclosure may be employed. The wireless communication system 100 may operate pursuant to a wireless standard, for example a high-efficiency 802.11 standard. The wireless communication system 100 may include an AP 104, which communicates with STAs 106 (referring generally to the STAs 106A-106D).

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with code division multiple access (CDMA) techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel. This communication link may be established via a single-input-single-output (SISO), multiple-input-single-output (MISO), single-input-multiple-output (SIMO), or a multiple-input-multiple output (MIMO) system.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network (e.g. TDLS, WiFi-Direct) between the STAs 106. Accordingly, the functions of the AP 104 described herein may alternatively be performed by one or more of the STAs 106.

In some aspects, a STA 106 may be required to associate with the AP 104 in order to send communications to and/or receive communications from the AP 104. In one aspect, information for associating is included in a broadcast by the AP 104. To receive such a broadcast, the STA 106 may, for example, perform a broad coverage search over a coverage region. A search may also be performed by the STA 106 by sweeping a coverage region in a lighthouse fashion, for example. After receiving the information for associating, the STA 106 may transmit a reference signal, such as an association probe or request, to the AP 104. In some aspects, the AP 104 may use backhaul services, for example, to communicate with a larger network, such as the Internet or a public switched telephone network (PSTN).

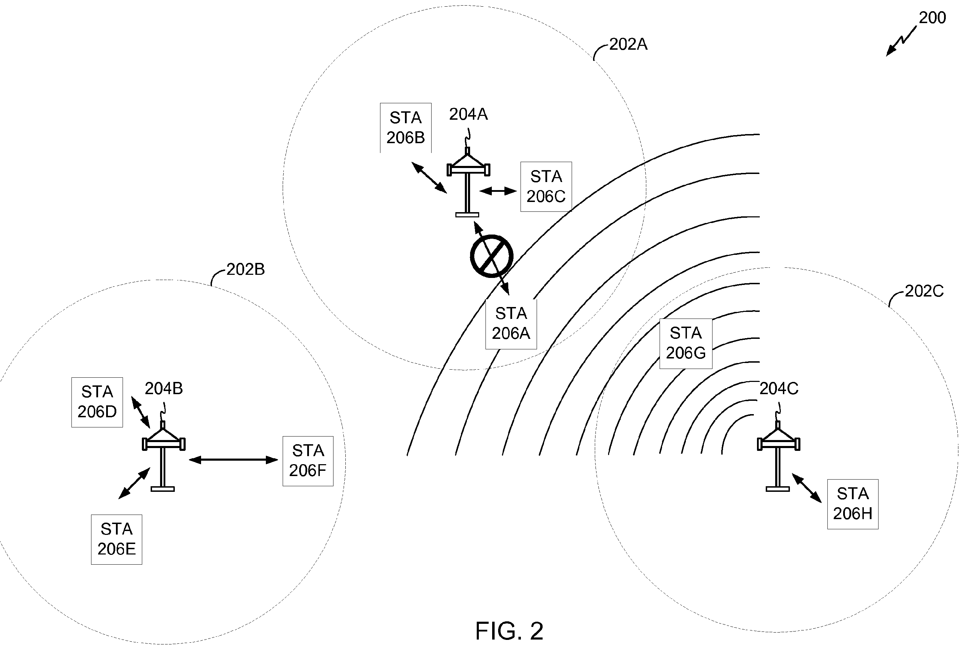

In some circumstances, a BSA may be located near other BSAs. For example, FIG. 2A is a diagram of a wireless communication system 200 in which multiple wireless communication networks are present. As illustrated in FIG. 2A, BSAs 202A, 202B, and 202C may be physically located near each other. Despite the close proximity of the BSAs 202A-202C, the APs 204A-204C and/or STAs 206A-206H may each communicate using the same spectrum. Thus, if a device in the BSA 202C (e.g., the AP 204C) is transmitting data, devices outside the BSA 202C (e.g., APs 204A-204B or STAs 206A-206F) may sense the communication on the medium.

Generally, wireless networks that use a regular 802.11 protocol (e.g., 802.11a, 802.11b, 802.11ac, 802.11g, 802.11n, etc.) operate under a carrier sense multiple access (CSMA) mechanism for medium access. According to CSMA, devices sense the medium and only transmit when the medium is sensed to be idle. Thus, if the APs 204A-204C and/or STAs 206A-206H are operating according to the CSMA mechanism and a device in the BSA 202C (e.g., the AP 204C) is transmitting data, then the APs 204A-204B and/or STAs 206A-206F outside of the BSA 202C may not transmit over the medium even though they are part of a different BSA.

FIG. 2A illustrates such a situation. As illustrated in FIG. 2A, AP 204C is transmitting over the medium. The transmission is sensed by STA 206G, which is in the same BSA 202C as the AP 204C, and by STA 206A, which is in a different BSA than the AP 204C. While the transmission may be addressed to the STA 206G and/or only STAs in the BSA 202C, STA 206A nonetheless may not be able to transmit or receive communications (e.g., to or from the AP 204A) until the AP 204C (and any other device) is no longer transmitting on the medium. Although not shown, the same may apply to STAs 206D-206F in the BSA 202B and/or STAs 206B-206C in the BSA 202A as well (e.g., if the transmission by the AP 204C is stronger such that the other STAs can sense the transmission on the medium).

The use of the CSMA mechanism may create inefficiencies because some APs or STAs located inside or outside of a BSA may be able to transmit data without interfering with a transmission made by an AP or STA in the BSA. As the number of active wireless devices continues to grow, the inefficiencies may begin to significantly affect network latency and throughput. For example, significant network latency issues may appear in apartment buildings, in which each apartment unit may include an access point and associated stations. In fact, each apartment unit may include multiple access points, as a resident may own a wireless router, a video game console with wireless media center capabilities, a television with wireless media center capabilities, a cell phone that can act like a personal hot-spot, and/or the like. Correcting the inefficiencies of the CSMA mechanism may then be vital to avoid latency and throughput issues and overall user dissatisfaction.

Such latency and throughput issues may not even be confined to residential areas. For example, multiple access points may be located in airports, subway stations, and/or other densely-populated public spaces. Currently, WiFi access may be offered in these public spaces, but for a fee. If the inefficiencies created by the CSMA mechanism are not corrected, then operators of the wireless networks may lose customers as the fees and lower quality of service begin to outweigh any benefits.

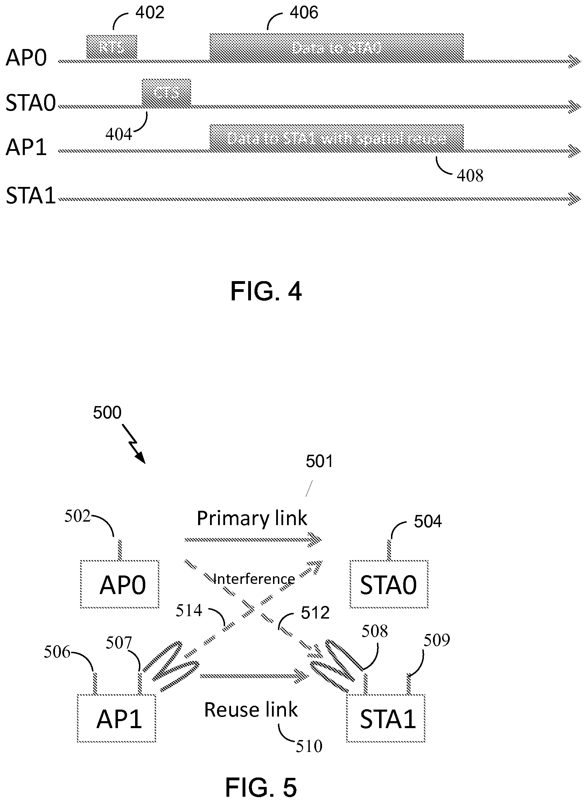

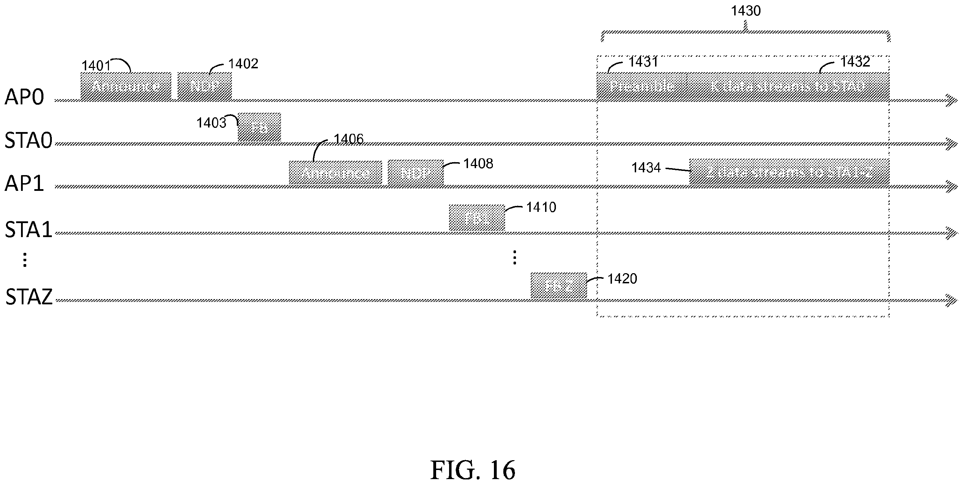

Accordingly, the high-efficiency 802.11 protocol described herein may allow for devices to operate under a modified mechanism that minimizes these inefficiencies and increases network throughput. Such a mechanism is described below with respect to FIGS. 4-17. Additional aspects of the high-efficiency 802.11 protocol are described below with respect to FIGS. 4-17.

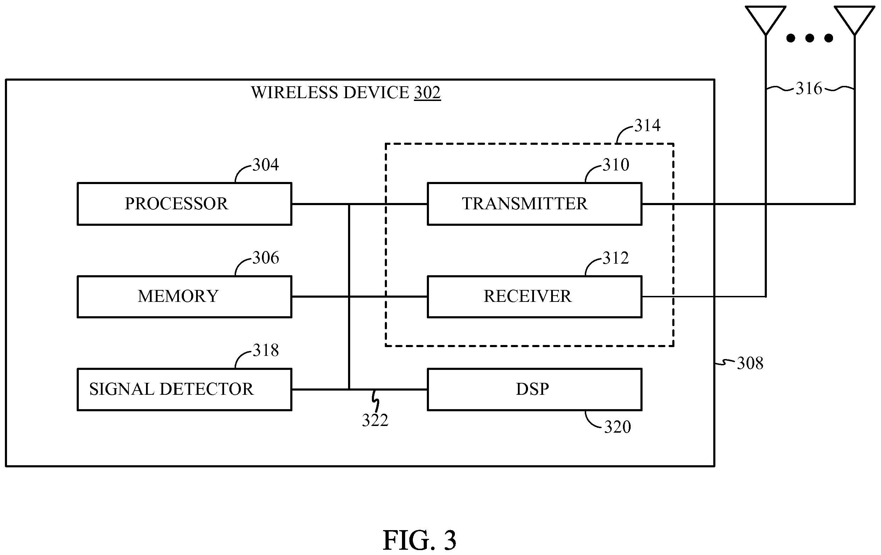

FIG. 3 is a block diagram that illustrates various components that may be utilized in a wireless device 302 that may be employed within the wireless communication system 100. The wireless device 302 is an example of a device that may be configured to implement the various methods described herein. The wireless device 302 may implement an AP 104 or a STA 106.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 may perform logical and arithmetic operations based on program instructions stored within the memory 306. The instructions in the memory 306 may be executable to implement the methods described herein.

The processor 304 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transceiver antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

Although a number of separate components are illustrated in FIG. 3, those of skill in the art will recognize that one or more of the components may be combined or commonly implemented. For example, the processor 304 may be used to implement not only the functionality described above with respect to the processor 304, but also to implement the functionality described above with respect to the signal detector 318 and/or the DSP 320. Further, each of the components illustrated in FIG. 3 may be implemented using a plurality of separate elements.

The wireless device 302 may comprise an AP 104, a STA 106, an AP 204, and/or a STA 206, and may be used to transmit and/or receive communications. That is, either AP 104, STA 106, AP 204, or STA 206 may serve as transmitter or receiver devices. Certain aspects contemplate signal detector 318 being used by software running on memory 306 and processor 304 to detect the presence of a transmitter or receiver.

In some aspects, the wireless system 100 illustrated in FIG. 1 operates in accordance with IEEE 802.11ac wireless communications standard. The 802.11ac provides a protocol for establishing communication links in a multi-user MIMO (MU-MIMO) system. In this system, an AP may send packets to one or more STAs via a primary communication link. Packets sent over the primary link may be sent via regular CSMA mechanisms or MIMO techniques. In some embodiments, another set of packets may be sent by other APs and STAs over a secondary or "reuse" link concurrently with the transmissions over the primary link to increase throughput and reuse of the medium. The frame sequence and spatial processing in the primary link are not affected by the secondary or reuse link, which autonomously performs spatial nulling of interference to and from the primary link. However, the primary link may broadcast information to aid the reuse link's spatial nulling, e.g., by sending training or scheduling information.

As discussed above, the use of the CSMA mechanism may create inefficiencies because some APs or STAs located inside or outside of a BSA may be able to transmit data without interfering with a transmission made by an AP or STA in the BSA. In such cases, those transmissions that would not interfere with the transmission by the AP or STA in the BSA may increase the throughput of the network. Embodiments described herein relate to facilitating simultaneous transmission on both the primary link and one or more secondary or reuse links utilizing beamformed communications. The beamformed transmission on the reuse link may be precoded and generated such that the reuse link transmissions do not cause interference with the primary link communication.

FIG. 4 is a sequence diagram illustrating an exchange of messages between an AP0 and a STA0 and between an AP1 and STA1. In this embodiment, the AP0 and STA0 communicate over the primary link and AP1 and STA1 communicate over the reuse link. In some aspects, the AP0 sends a first message, a request to send (RTS) message 402, to the STA0. The AP1 may receive the RTS message 402 and determine a time when the AP0 will send a second message, data 406 to STA0. STA1 may also receive the RTS message 402 and determine channel state information (CSI) of the spatial channel to AP0 based on training symbols in the RTS message 402. With this channel information, the STA1 may reduce or cancel spatially interference from the AP0 when the AP0 sends data 406 to STA0 while receiving data 408 from AP1. STA1 responds to the RTS message 402 by sending a third message, a clear to send (CTS) message 404, back to the AP0. AP1 may also receive the CTS message 404 and determine channel state information (CSI) of the spatial channel to STA0 based on training symbols in the CTS message 404. With this channel information, the AP1 may precode a transmission to perform spatial nulling of interference to the STA0 when the AP1 sends data 408 to STA1. FIG. 4 depicts RTS and CTS messages 402 and 404, however, any message or packet exchange between the AP0 and STA0 may be used to allow concurrent use over the reuse link.

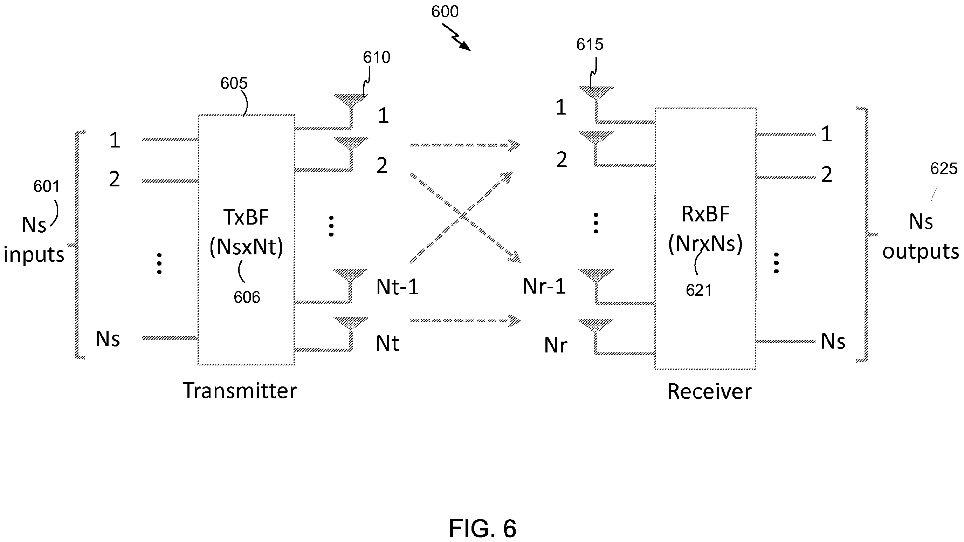

FIG. 5 is a diagram illustrating exemplary transmissions in a wireless communication system 500 in which multiple wireless devices are present. In this embodiment, the AP0 and STA0 communicate over the primary link 501 and AP1 and STA1 communicate over the reuse link 510. AP0 and STA0 each have 1 antenna, 502 and 504, respectively. AP1 has 2 antennas 506 and 507 and STA1 has two antennas 508 and 509. When the AP0 transmits over the primary link 501 to STA0 via its antenna 502, the transmission may cause interference 512 at STA1. However, as described with reference to FIG. 4, since STA1 has determined the CSI of AP0 from the RTS message 402, STA1 may use its antennas 508 and 509 to both reduce or cancel interference 512 from the AP0 transmission and receive a transmission from the API over the reuse link 510. In some embodiments, the STA1 may use a beamforming matrix (e.g., matrix 621 of FIG. 6) and the CSI to precode its reception of the AP1 transmission so that no or nominal interference is caused by the AP0 transmission. Similarly, when AP1 transmits over the reuse link 510 to STA1, it may cause interference 514 at STA0. The AP1 may use the CSI from the CTS message 404 and its antennas 506 and 507 to both reduce or cancel interference 514 to the STA0 and transmit a message to the STA1 over the reuse link 510. In some embodiments, the AP1 may use a beamforming matrix (e.g., matrix 606 of FIG. 6) and the CSI to precode its transmission to STA1 so that no or nominal interference is caused at STA0. It is beneficial that minimal or no interference 514 is caused at the receiver side of the reuse link 510 communication (e.g., STA1) because it facilitates reception of the intended signal. It is also beneficial that minimal or no interference 512 is caused from the transmission side (e.g., AP1) of the reuse link 510 communication because it directly avoids AP1's transmission interfering with STA0's reception of the intended signal from AP0.

FIG. 6 is a diagram illustrating a general MIMO system 600. The MIMO system 600 comprises a transmitter 605 and a receiver 620. At the transmitter 605, Nₛ inputs (streams) 601 are multiplexed on Nₜ antennas 610 via a (Nₛ x Nₜ) transmitter (TX) beamforming (BF) matrix 606. At the receiver 620, Nᵣ antennas 615 are multiplexed with Nₛ outputs 625. The Nₛ outputs 625 are obtained after passing through a (Nᵣ x Nₛ) receiver (RX) BF matrix 621. Nₛ inputs 601 and Nₛ outputs 625 may be referred to as "virtual TX antennas" or "virtual RX antennas," respectively.

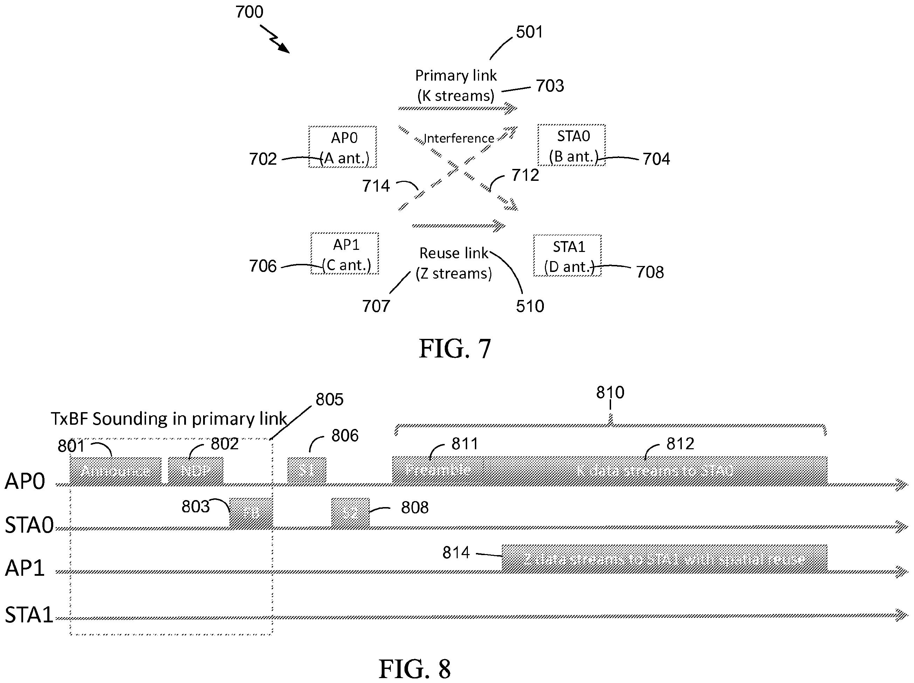

FIG. 7 is a diagram illustrating exemplary transmissions in a wireless communication system 700 in which multiple wireless devices are present. In this embodiment, the AP0 and STA0 communicate over the primary link 501 and API and STA1 communicate over the reuse link 510. In the primary link 501, the AP0 comprises A antennas 702 and sends K spatial streams 703 to STA0, which comprises B antennas 704. In the reuse link 510, AP1, having C antennas 706, sends Z spatial streams 707 to STA1, which comprises D antennas 708. In some embodiments, the AP0 transmission of the K spatial streams 703 may cause interference 712 at the D antennas 708 of STA1. Similarly, the API transmission of the Z spatial streams 707 may cause interference 714 at the B antennas 704 at STA0. To avoid the interference 712 and 714, the API and STA1 may require that enough C antennas 706 and D antennas 708 be available to spatially cancel the interference 712 and 714 during transmission of the K spatial streams 703 and the Z spatial streams 707. The maximum allowed Z spatial streams 707 that may be transmitted without interference 712 and 714 may be represented by the following equation: Max of Z = min{(D-K),(C-K)}, where D≥K, C≥K. The number of C antennas 706 and D antennas 708 must be greater than the number of K spatial streams 703 because API and STA1 may require K degrees of freedom to reduce or cancel interference to and from the primary link 501 (e.g., interference 712 and 714). Thus, the more antennas in the reuse link 510 above the number of K spatial streams 703, the more reusable streams (Z spatial streams 707).

FIG. 8 is a sequence diagram illustrating an exchange of messages between the AP0 and the STA0 and between the AP1 and the STA1. In some embodiments, the AP0 and STA0 communicate over the primary link 501 and AP1 and STA1 communicate over the reuse link 510. In this embodiment, the AP0 sends a null data packet announcement frame (NDPA) 801 and then a null data packet (NDP) 802. In some embodiments, the NDPA 801 and NDP 802 may comprise a single first message. In some embodiments, the NDP 802 may comprise the first message and the NDPA 801 may comprise a previous message send by the AP0. The STA0 may compute a receiver beamforming matrix (e.g., RX BF matrix 621 of FIG. 6) to receive a future transmission of a second message from the AP0 (e.g., PPDU 810 discussed below). The STA0 may then send a third message, a CSI feedback (FB) 803, to AP0 in response to the NDPA 801 and NDP 802. The AP0 may then use the CSI FB 803 for a later transmission to STA0 (e.g., PPDU 810 discussed below). In some embodiments, the API may also receive the CSI FB 803 from the STA0 and use the CSI to compute a transmitter beamforming matrix (e.g., TX BF matrix 606 of FIG. 6) for concurrently transmitting a message to STA1 (e.g., PPDU 814 discussed below) during a transmission from the AP0 to the STA0 (e.g., PPDU 810). The NDPA 801, NDP 802, and CSI FB 803 exchange may be referred to as primary link sounding 805. In embodiments where AP0 and STA0 each have one antenna, primary link sounding 805 may not be necessary.

In some embodiments, to aid API's reuse decision, AP0 can indicate its spatial steam number (e.g., K spatial streams 703) in the NDPA 801. After decoding the NDPA 801, AP1 may compute the maximum number of reusable streams (Z spatial streams 707) based on the previous equation and may decide to reuse the medium if Z is positive. To maximize Z, AP1 can select the STA1 with the most number of antennas (e.g., D antennas 708).

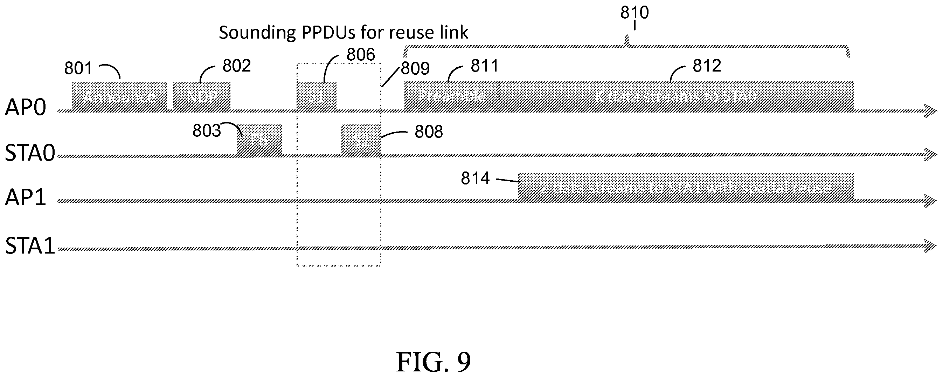

FIG. 9 depicts a sequence diagram illustrating an exchange of messages between the AP0 and the STA0 and between the AP1 and the STA1. The exchange illustrated in FIG. 9 continues the exchange described above with respect to FIG. 8. As discussed above, in order to reuse the medium, it may be desirable for the AP1 and STA1 to determine the MIMO channels to the STA0's and AP0's K virtual antennas (e.g., RX virtual antennas 625 and TX virtual antennas 601), respectively. To further aid the channel estimation in the reuse link 510, AP0 may send training symbols from its K virtual antennas in a long training field (LTF) of a fourth message, a sounding physical layer data unit (PPDU), S1 message 806. Based on the training symbols, STA1 may then determine the MIMO channels to AP0's K virtual antennas. The STA1 may then compute a RX BF matrix (e.g., RX BF matrix 621) to spatially null interference (e.g., interference 712) from AP0. In some embodiments, STA1 nulls interference from AP0 through the reception of a beamformed message such that the interference received from AP0 at STA1 is reduced below a certain threshold. Similarly, STA0 can aid the reuse link 510 by sending training symbols from its K virtual antennas in a LTF of a fifth message, a sounding PPDU, e.g. S2 message 808, in response to the fourth message, S1 message 806. Based on the training symbols, API may then determine the MIMO channels to STA0's K virtual antennas. The API may then compute a TX BF matrix (e.g., TX BF matrix 606) to spatially null interference (e.g., interference 714) to STA0. In some embodiments, API nulls interference to STA0 through the transmission of a beamformed message such that the interference from API received at STA0 is reduced below a certain threshold. The S1 message 806 and S2 message 808 exchange may be referred to as a reuse link sounding 809.

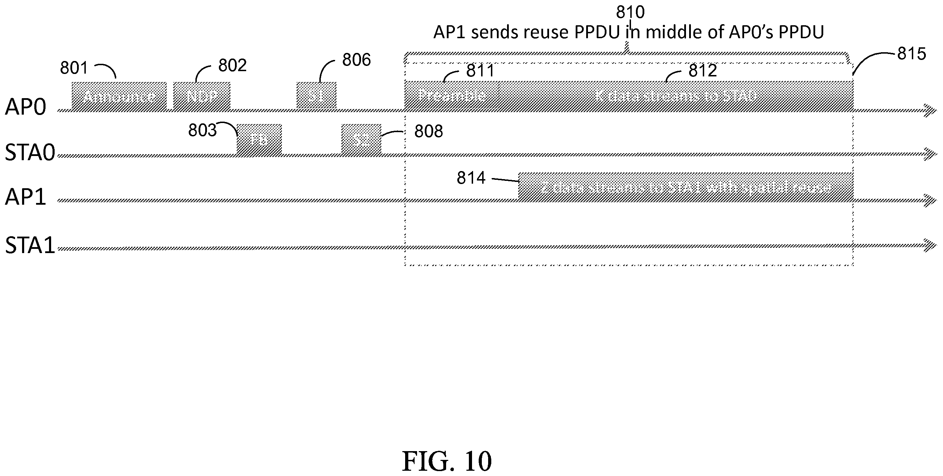

FIG. 10 depicts a sequence diagram illustrating an exchange of messages between the AP0 and the STA0 and between the AP1 and the STA1. The exchange illustrated in FIG. 10 continues the exchange described above with respect to FIG. 10. After the S1 message 806 and S2 message 808 exchange, the AP0 sends a PPDU 810 with K spatial streams 703 to STA0 via a MIMO transmission (e.g., transmit beamforming or regular CSMA protocol). The PPDU 810 comprises a preamble portion 811 and a data portion 812. After receiving the preamble portion 811 of AP0's PPDU 810, AP1 sends a reuse PPDU 814 with Z spatial streams 707 to STA1 via its TX BF matrix 606, which nulls interference to STA0. In some embodiments, AP1 schedules the PPDU 814 immediately at end of preamble portion 811, or after a CSMA backoff. In some aspects, the PPDU 814 may end at the same time as the PPDU 810 to synchronize the medium. As discussed above, STA1 is able to receive the PPDU 814 because after receiving S1 message 806, STA1 computes a RX BF matrix to null interference from AP0's PPDU 810 transmission and to receive PPDU 814 from AP1 over the reuse link.

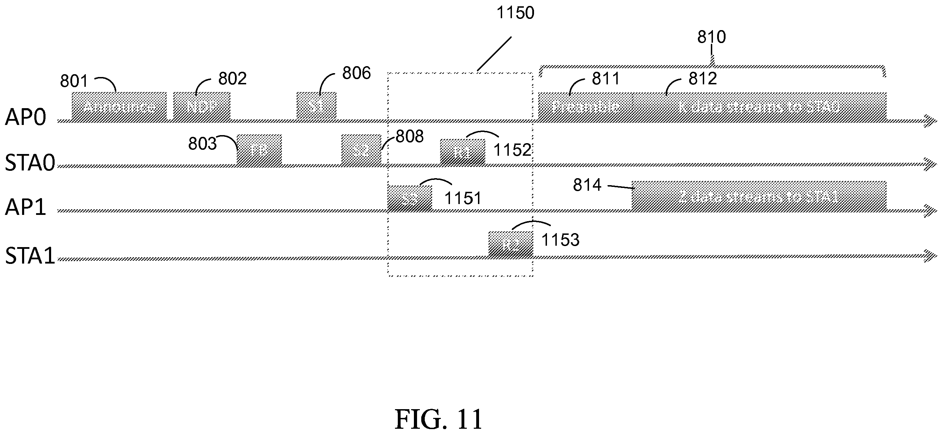

In some embodiments, it may be difficult to estimate a supported rate after reuse for each of the primary link and the reuse link due to imperfect spatial nulling and unknown number of reusing TXs. In order to obtain a better estimate of the supported rate, the AP0 may schedule with a TX in the reuse link (e.g., AP1) to both transmit sounding frames before transmission of the PPDU 810 and PPDU 814. STAs may estimate a rate of transmission based on the sounding transmissions and may inform its associated AP of the estimated rate. In some aspects, the AP0 may schedule multiple TXs and/or RXs in the reuse link to send sounding transmissions. FIG. 11 is a sequence diagram illustrating an exchange of messages between the AP0 and the STA0 and between the AP1 and the STA1 including sounding transmission to better estimate a supported rate of transmission. The exchange illustrated in FIG. 11 is similar to and adapted from the exchange illustrated in FIG. 10. Elements common to both share common reference indicia, and only differences between the exchanges are described herein for the sake of brevity.

In FIG. 11, after receiving S2 message 808, based on AP0's selection of AP1 as the reuse TX, the AP1 sends training symbols from its Z virtual antennas in LTF of a sounding PPDU, e.g., S3 message 1151. The S3 message 1151 may also indicate the intended RX in the reuse link 510 (e.g., STA1). Based on S1 message 806 and S3 message 1151, STA0 and STA1 can estimate the signal-to-interference-plus-noise ratio (SINR) per stream and the corresponding rate. STA0 and STA1 then send this estimate back to AP0 and AP1 via a sixth message, R1 message 1152, and a seventh message, a R2 message 1153, respectively. In some embodiments, STA0 can also feed back the estimated rate for both cases, with and without reuse. If the estimated rate with reuse is lower than that without reuse, the AP0 may indicate "no reuse" in the preamble portion 811 and transmit the PPDU 812 at the rate without reuse, and AP1 should not transmit over the reuse link in this case.

As described above, in some aspects the AP0 may indicate at least one selected pair of reusing TX/RX, e.g. AP1/STA1, in the NDPA 801 or S1 message 806, to send training symbols and/or feedback for rate prediction. Alternatively, in some aspects the AP0 may only indicate at least one selected reusing TX, e.g. AP1. In this aspect, the AP1 should indicate a reusing RX, e.g. STA1, in the S3 message 1151. When selecting a candidate pair of reusing AP1/STA1, the reusing AP1/STA1 may have to pass some basic criteria. For example, the AP1 should have a number of antennas greater than the number of K spatial streams to null interference to STA0. Additionally, STA1 should have a number of antennas greater than the number of K spatial streams to null interference from AP0. Moreover, AP1 should have buffered data to send to STA1. If an AP1/STA1 pair satisfies these criteria, the AP0 may select them for reusing the reuse communication link and for sending additional sounding for rate estimation. When there are multiple candidate pairs that satisfy the above criteria, the AP0 may select a pair based on further criteria. For example, the AP0 may select the pair with the most amount of buffered data. Another option would be for the AP0 to select the pair who has the highest number of reusable streams and/or spatial nulling capability, e.g., the pair that has the maximum value for the equation min{(D-K),(C-K)} discussed with respect to FIG. 7 above. In some embodiments, the AP0 may select multiple TXs and multiple RXs for one or more reuse links.

In some embodiments, the AP0 may identify candidate reuse TX/RX pairs that satisfy the above criteria in a number of ways. In one option, every TX may indicate in a packet the number of antennas, identification of the TX and the RX, and the amount of buffered data. In this option, the AP0 may determine candidate pairs by monitoring over-the-air (OTA) packets in a certain period of time before the AP0 wishes to transmit. In another option, neighboring TXs intending to reuse the medium can send an explicit reuse request to the AP0 with the above information so that the AP0 can determine candidate pairs based on the received requests.

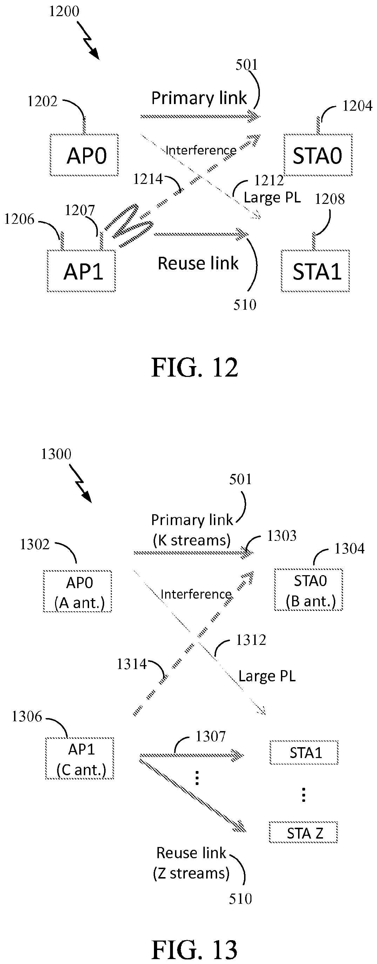

In some embodiments, a reusing RX (e.g., STA1) cannot spatially null interference from the primary link 501. The STA1 may not be able to null interference because it does not have enough antennas to null the interference. FIG. 12 is a diagram illustrating exemplary transmissions in a wireless communication system 1200 in which multiple wireless devices are present. In this embodiment, the AP0 and STA0 communicate over the primary link 501 and AP1 and STA1 communicate over the reuse link 510. AP0 and STA0 each have 1 antenna, 1202 and 1204, respectively. AP1 has 2 antennas 1206 and 1207 and STA1 has one antenna 1208. When the AP0 transmits over the primary link 501 to STA0 via its antenna 1202, the transmission may cause interference 1212 at STA1. However, STA1 may not have more than one antenna to null the interference 1212. To mitigate interference 1212 from the primary link 501, AP1 may select a STA1 with large path loss from AP0 (e.g., STA1 far away from AP0). When the AP1 transmits over the reuse link 510 to STA1, it may cause interference 1214 at STA0. The AP1 may use the CSI from the CTS message 404 and its antennas 1206 and 1207 form a TX beamform pattern spatially nulling interference 1214 to the STA0 while beamforming a message to the STA1 over the reuse link 510.

FIG. 13 is a diagram illustrating exemplary transmissions in a wireless communication system 1300 in which multiple wireless devices are present. In FIG. 13, the AP0 and STA0 communicate over the primary link 501, while AP1 and STA1 - STA Z communicate over the reuse link 510. In the primary link 501, AP0 comprises A antennas 1302 and sends K spatial streams 1303 to a STA0, which comprises B antennas 1304. In the reuse link 510, AP1 comprises C antennas 1306 and sends Z spatial streams 1307 to Z STAs with a single antenna per STA, where each of the Z STAs cannot spatially null interference from AP0. The API therefore selects Z STAs with large path loss from AP0 to mitigate interference 1312 at the Z stations. The AP1 transmission over the reuse link 510 may cause interference at the STA0. The AP1 may use the CSI from the CTS message 404 and its C antennas 1306 to both reduce or cancel interference 1314 to the STA0 and to beamform Z spatial streams 1307 to the Z STAs over the reuse link 510. The maximum number of Z spatial streams allowed without causing interference at STA0 may be represented by the following equation: Max of Z = C-K, where C≥K. The API therefore uses K spatial degrees of freedom to null interference to STA0.

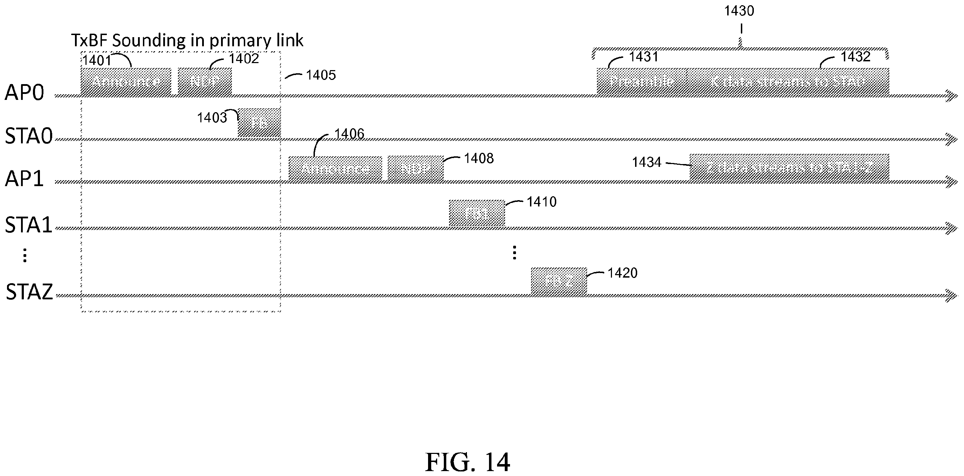

FIG. 14 is a sequence diagram illustrating an exchange of messages between the AP0 and the STA0 and between an AP1 and STA1 - STA Z. In this embodiment, the AP0 and STA0 communicate over the primary link 501 and the AP1 and the STA1 - STA Z communicate over the reuse link 510. In FIG. 14, the AP0 begins the exchange using a similar primary link sounding 1405 as the primary sounding 805 as shown and described with respect to FIG. 8. The primary sounding 1405 comprises a NDPA 1401, a NDP 1402 and a CSI FB 1403. In some embodiments, the AP0 may indicate a reusing TX AP1 and the maximum number of allowed reusable streams Z in the NDPA 1401. By sniffing OTA packets, the AP0 may determine that AP1 has sufficient antennas to achieve a positive Z value (e.g., C antennas > than K spatial streams) and that AP1 has data buffered for some STAs (e.g., STA1 - STA Z) beyond AP0's coverage. AP0 determines STAs served by AP1 but beyond AP0's coverage if it detects AP1's data to some STAs but does not detect any acknowledgment (ACK) from those STAs. To aid AP1's selection of reusing STAs, AP0 may also indicate the IDs of AP1's STAs beyond AP0's coverage in the NDPA 1401. To aid AP1's channel estimation, STA0 may send training symbols from its K virtual antennas in its CSI FB 1403 frame. Based on the training symbols, AP1 may determine the MIMO channel to STA0's K virtual antennas and may then compute a TX BF matrix to spatially null interference to STA0.

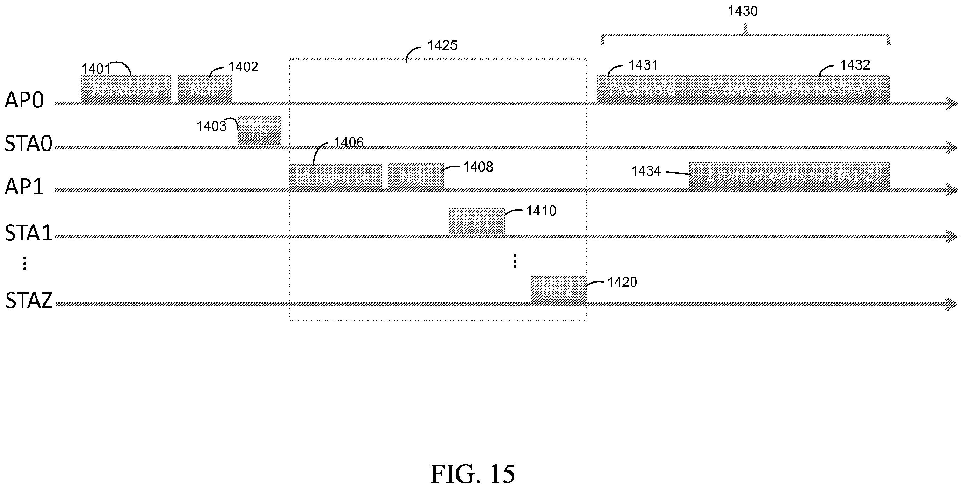

FIG. 15 depicts a sequence diagram illustrating an exchange of messages between the AP0 and the STA0 and between the AP1 and the STA1 - STA Z. The exchange illustrated in FIG. 15 continues the exchange described above with respect to FIG. 14. After the CSI FB 1403, AP0 reserves a duration for sounding/feedback transmissions in the reuse link 510. In this duration, referred to as reuse link sounding 1425, AP1 selects no more than Z reusing STAs beyond AP0's coverage and solicits their feedback of channel matrix information to API (similar to very high throughput (VHT) MU-MIMO sounding). API begins the reuse link sounding 1425 by sending a NDPA 1406 followed by a NDP 1408. The NDPA 1406 identifies STAs (e.g., STA1 - STA Z) beyond APO's coverage based on either a STA report from STAs within API's coverage (e.g., indicating a received signal strength indicator (RSSI) from the AP0) or AP0's indication in the NDPA 1401. Each of the STAs (STA1 - STA Z) will send CSI FB messages to the API in response to the NDPA 1406 and NDP 1408. For example the STA1 may send CSI FB 1410 and STA Z may send CSI FB 1420 to AP1. AP1 uses the CSI FB messages for later BF data transmissions to each of the STA1 - STA Z.

After the reserved duration for reuse link sounding 1425, AP0 transmits a PPDU 1430 with K streams to STA0 in TX BF. The PPDU 1430 comprises a preamble portion 1431 and a data portion 1432. At the end of AP0's preamble portion 1431, AP1 beamforms Z data streams 1434 to Z reusing STAs 1-Z during the PPDU 1430 in the way similar to VHT DL MU-MIMO. AP1's beamform transmissions are formed based on CSI FB (e.g., CSI FB 1410 - 1420) from STAs 1-Z as well as STA0. The AP1 spatially nulls interference to STA0 while transmitting Z data streams 1434 to STAs 1-Z.

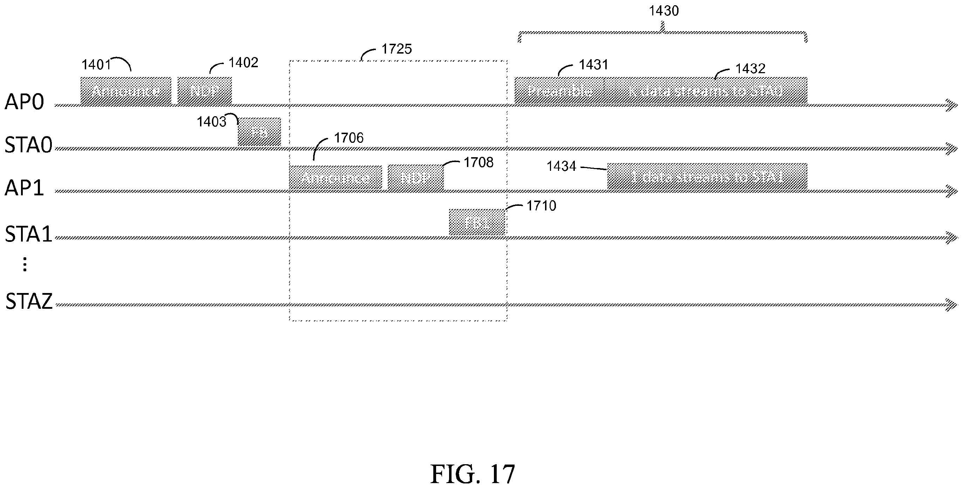

In some embodiments, the duration reserved for the reuse sounding 1425 may be based on the estimated maximum number of reusing STAs, Z. However, AP1 may have a number of actual reusing STAs less than Z and the AP0 may therefore reserve excess time for reuse sounding. To minimize unused reservation, AP1 can indicate the actual required duration based on the number of actual reusing STAs. FIG. 17 is a sequence diagram illustrating an exchange of messages between the AP0 and the STA0 and between the AP1 and the STA1 - STA Z. FIG. 17 is similar to and adapted from the exchange illustrated in FIG. 15. Elements common to both share common reference indicia, and only differences between the exchanges are described herein for the sake of brevity. In this embodiment, the AP1 transmits a NDPA 1706 that includes the actual required duration based on number of actual STAs reusing the medium. FIG. 17 shows the reduced duration reserved for reuse sounding 1725. After detecting AP1's NDPA, AP0 decodes the actual required duration and hence can then start transmission of the PPDU 1430 at the end of actual required duration for reuse sounding 1725.

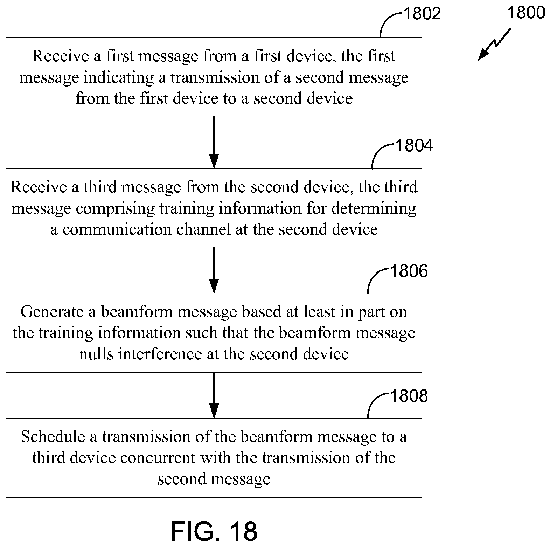

FIG. 18 is a flow chart of an exemplary method 1800 of wireless communication, in accordance with certain embodiments described herein. Although the method 1800 is described herein with reference to communications among a AP0, STA0, AP1, and STA1 as discussed above with respect to FIGs. 4-17, a person having ordinary skill in the art will appreciate that the method 1800 may be implemented by other suitable devices and systems. For example, the method 1800 may be performed by a STA 206, STA0, STA1, or a plurality of APs 204, AP0, or AP1. Although the method 1800 is described herein with reference to a particular order, in various embodiments, blocks herein may be performed in a different order, or omitted, and additional blocks may be added. For example, the operational block 1804 may be sent after operational block 1806 in certain embodiments.

In operation block 1802 a first message from a first device, the first message indicating a transmission of a second message from the first device to a second device is received. In operational block 1804, a third message from the second device, the third message comprising training information for determining a communication channel at the second device is received. In operational block 1806, a beamformed message based at least in part on the training information such that the beamformed message nulls interference at the second device is generated. In operational block 1808, a transmission of the beamformed message to a third device concurrent with the transmission of the second message is scheduled.

An apparatus for wireless communication, in accordance with certain embodiments described herein, may perform one or more of the functions associated with method 1800. In some embodiments, the apparatus may comprise means for receiving a first message from a first device, the first message indicating a transmission of a second message from the first device to a second device and for receiving a third message from the second device, the third message comprising training information for determining a communication channel at the second device. In certain embodiments, the means for receiving can be implemented by the transceiver 314 (FIG. 3) or by the receiver 312 (FIG. 3). The apparatus may further comprise means for generating a beamformed message based at least in part on the training information such that the beamformed message nulls interference at the second device. In certain embodiments, the means for generating can be implemented by the processor 304 (FIG. 3) or by the DSP 320 (FIG. 3). The apparatus may further comprise means for scheduling a transmission of the beamformed message to a third device concurrent with the transmission of the second message. In certain embodiments, the means 1906 for scheduling can be implemented by the processor 304 (FIG. 3) or by the DSP 320 (FIG. 3).

It should be understood that any reference to an element herein using a designation such as "first," "second," and so forth does not generally limit the quantity or order of those elements. Rather, these designations can be used herein as a convenient wireless device of distinguishing between two or more elements or instances of an element. Thus, a reference to first and second elements does not mean that only two elements can be employed there or that the first element can precede the second element in some manner. Also, unless stated otherwise a set of elements can include one or more elements.

A person/one having ordinary skill in the art would understand that information and signals can be represented using any of a variety of different technologies and techniques. For example, data, instructions, commands, information, signals, bits, symbols, and chips that can be referenced throughout the above description can be represented by voltages, currents, electromagnetic waves, magnetic fields or particles, optical fields or particles, or any combination thereof.

Various modifications to the implementations described in this disclosure can be readily apparent to those skilled in the art, and the generic principles defined herein can be applied to other implementations without departing from the scope of this disclosure. Thus, the disclosure is not intended to be limited to the implementations shown herein, but is to be accorded the widest scope consistent with the claims. The word "exemplary" is used exclusively herein to mean "serving as an example, instance, or illustration." Any implementation described herein as "exemplary" is not necessarily to be construed as preferred or advantageous over other implementations.

Certain features that are described in this specification in the context of separate implementations also can be implemented in combination in a single implementation. Conversely, various features that are described in the context of a single implementation also can be implemented in multiple implementations separately or in any suitable sub-combination. Moreover, although features can be described above as acting in certain combinations and even initially claimed as such, one or more features from a claimed combination can in some cases be excised from the combination, and the claimed combination can be directed to a sub-combination or variation of a sub-combination.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

While the foregoing is directed to aspects of the present disclosure, other and further aspects of the disclosure may be devised without departing from the basic scope thereof, and the scope thereof is determined by the claims that follow.

## Claims

1. A method of wireless communication, comprising:
receiving, at an access point (104, 204), a first message (402) from a first device (502), the first message (402) indicating a transmission of a second message (406) from the first device (502) to a second device (504);
receiving, at the access point (104, 204), a third message (404) from the second device (504), the third message (404) comprising training information for determining a communication channel at the second device (504);
generating, at the access point (104, 204), a beamformed message (408) for transmission based at least in part on the training information such that the transmission of the beamformed message (408) performs nulling of interference at the second device (504); and
scheduling a transmission of the beamformed message (408) from the access point (104, 204) to a third device (509) concurrent with the transmission of the second message (406).

2. The method of claim 1, wherein the beamformed message (408) comprises a physical layer data unit, PPDU,
or the method further comprising transmitting the beamformed message (408) over two or more antennas.

3. The method of claim 1, wherein scheduling a transmission of the beamformed message (408) comprises scheduling the beamformed message (408) such that the beamformed message (408) completes its transmission at the same time as the third message (404).

4. The method of claim 1, wherein the first message (402) further indicates at least one transmitter in a communication link for generating the beamformed message (408),
in particular wherein the first message (402) further indicates a receiver corresponding to each indicated transmitter in the communication link.

5. The method of claim 1, wherein the first message (402) can be sent via carrier sense multiple access, CSMA, or follow a previous message sent by the first device (502) via CSMA,
or wherein scheduling a transmission of the beamformed message (408) comprises scheduling a transmission of the beamformed message (408) after a preamble portion of the second message (406).

6. The method of claim 1, further comprising:
transmitting a fourth message, the fourth message comprising training information for estimating a signal-to-interference-plus-noise ratio, SINR, per spatial stream corresponding transmission rate; and
receiving a fifth message from the third device (509) in response to the fourth message, the fifth message comprising an estimated SINR and transmission rate,
the method in particular further comprising receiving a sixth message from the second device (504), the sixth message based on the first and fourth message and comprising an estimated SINR and transmission rate for the transmission of the second message (406) by the first device (502),
or the method in particular further comprising selectively transmitting the beamformed message (408) based at least in part on an indication in the second message (406).

7. The method of claim 1, further comprising selecting the third device (509) based on a number of antennas of the third device (509),
in particular wherein selecting the third device further comprises selecting the third device (509) based on a path loss from the first device (502) to the third device (509), or in particular wherein selecting the third device (509) comprises selecting the third device (509) based on the third device (509) having sufficient antennas to generate a beamform pattern such that the beamform pattern performs nulling of interference at the first device (502) during reception of the beamformed message (408).

8. An apparatus for wireless communication, comprising:
means for receiving a first message (402) from a first device (502), the first message (402) indicating a transmission of a second message (406) from the first device (502) to a second device (504);
means for receiving a third message (404) from the second device (504), the third message (404) comprising training information for determining a communication channel at the second device (504);
means for generating a beamformed message (408) for transmission based at least in part on the training information such that the transmission of the beamformed message (408) performs nulling of interference at the second device (504); and
means for scheduling a transmission of the beamformed message (408) to a third device (509) concurrent with the transmission of the second message (406).

9. The apparatus of claim 8, wherein the various means are embodied within:
a receiver configured to receive a first message (402) from a first device (502), the first message (402) indicating a transmission of a second message (406) from the first device to a second device (504), the receiver further configured to receive a third message (404) from the second device (504), the third message (404) comprising training information for determining a communication channel at the second device (504); and
a processor configured to generate a beamformed message (408) for transmission based at least in part on the training information such that the transmission of the beamformed message (408) performs nulling of interference at the second device (504), the processor further configured to schedule a transmission of the beamformed message (408) to a third device (509) concurrent with the transmission of the second message (406).

10. The apparatus of claim 9, wherein the processor is further configured to schedule the beamformed message (408) such that the beamformed message (408) completes its transmission at the same time as the third message (404),
or wherein the transmitter is further configured to selectively transmit the beamformed message (408) based at least in part on an indication in the second message (406).

11. The method of claim 1 or the apparatus of claim 9, wherein the first message (402) further indicates a number of spatial streams for the transmission of the second message (406),
in particular further comprising selectively transmitting the beamformed message (408) based at least in part on the number of spatial streams for the transmission of the second message (406).

12. The apparatus of claim 9, wherein the first message (402) further indicates at least one transmitter in a communication link for generating the beamformed message (408),
or wherein the processor is further configured to schedule a transmission of the beamformed message (408) after a preamble portion of the second message (406).

13. The apparatus of claim 9, further comprising a transmitter configured to transmit a fourth message, the fourth message comprising training information for estimating a signal-to-interference-plus-noise ratio, SINR, per spatial stream corresponding transmission rate, and
wherein the receiver is further configured to receive a fifth message from the third device (509) in response to the fourth message, the fifth message comprising an estimated SINR and transmission rate,
the apparatus in particular wherein the receiver is further configure to receive a sixth message from the second device (504), the sixth message based on the first and fourth message and comprising an estimated SINR and transmission rate for the transmission of the second message (406) by the first device (502).

14. The apparatus of claim 9, wherein the processor is further configured to select the third device (509) based on a number of antennas of the third device (509),
in particular wherein the processor is further configured to select the third device (509) based on a path loss from the first device (502) to the third device (509),
or in particular wherein the processor is further configured to select the third device (509) based on the third device (509) having sufficient antennas to generate a beamform pattern such that the beamform pattern performs nulling of interference at the first device (502) during reception of the beamformed message (408).

15. A computer program comprising instructions for performing a method according to any one of the claims 1 to 7.

## Patentansprüche

1. Verfahren zur drahtlosen Kommunikation, aufweisend:
Empfangen an einem Zugriffspunkt (104, 204) einer ersten Nachricht (402) von einer ersten Vorrichtung (502), wobei die erste Nachricht (402) eine Übertragung einer zweiten Nachricht (406) von der ersten Vorrichtung (502) zu der zweiten Vorrichtung (504) anzeigt;
Empfangen an dem Zugriffspunkt (104, 204) einer dritten Nachricht (404) von der zweiten Vorrichtung (504), wobei die dritte Nachricht (404) Trainingsinformationen umfasst zum Bestimmen eines Kommunikationskanals an der zweiten Vorrichtung (504);
Generieren an dem Zugriffspunkt (104, 204) einer strahlgeformten Nachricht (408) zur Übertragung basierend zumindest teilweise auf der Trainingsinformation, so dass die Übertragung der strahlgeformten Nachricht (408) Interferenzauslöschung bei der zweiten Vorrichtung (504) durchführt; und
Planen einer Übertragung der strahlgeformten Nachricht (408) von dem Zugriffspunkt (104, 204) zu einer dritten Vorrichtung (508) gleichzeitig mit der Übertragung der zweiten Nachricht (406).

2. Das Verfahren nach Anspruch 1, wobei die strahlgeformte Nachricht (408) eine physikalische-Schicht-Dateneinheit, PPDU, umfasst, oder wobei das Verfahren weiterhin ein Übertragen der strahlgeformten Nachricht (408) über zwei oder mehr Antennen umfasst.

3. Das Verfahren nach Anspruch 1, wobei das Planen einer Übertragung der strahlgeformten Nachricht (408) ein Planen der strahlgeformten Nachricht (408) umfasst, so dass die strahlgeformte Nachricht (408) ihre Übertragung abschließt zur gleichen Zeit wie die dritte Nachricht (404).

4. Das Verfahren nach Anspruch 1, wobei die erste Nachricht (402) weiterhin zumindest einen Sender in einer Kommunikationsverbindung anzeigt zum Generieren der strahlgeformten Nachricht (408), insbesondere wobei die erste Nachricht (402) weiter einen Empfänger anzeigt entsprechend jedem angezeigten Sender in der Kommunikationsverbindung.

5. Das Verfahren nach Anspruch 1, wobei die erste Nachricht (402) gesendet werden kann mittels Träger-Prüfung-Mehrfachzugriff, CSMA, oder einer vorherigen Nachricht folgen kann, welche durch die erste Vorrichtung (502) mittels CSMA gesendet wurde, oder wobei das Planen einer Übertragung der strahlgeformten Nachricht (408) ein Planen einer Übertragung der strahlgeformten Nachricht (408) nach einem Präambel-Teil der zweiten Nachricht (406) umfasst.

6. Das Verfahren nach Anspruch 1, weiter aufweisend:
Übertragen einer vierten Nachricht, wobei die vierte Nachricht Trainingsinformationen umfasst zum Abschätzen eines Signal-zu-Interferenz-plus-Rauschen-Verhältnisses, SINR, pro räumlichen Strom entsprechender Übertragungsrate; und
Empfangen einer fünften Nachricht von der dritten Vorrichtung (509) in Antwort auf die vierte Nachricht, wobei die fünfte Nachricht ein geschätztes SINR und Übertragungsrate umfasst, wobei das Verfahren insbesondere weiter aufweist ein Empfangen einer sechsten Nachricht von der zweiten Vorrichtung (504), wobei die sechste Nachricht auf der ersten und vierten Nachricht basiert und ein geschätztes SINR und Übertragungsrate für die Übertragung der zweiten Nachricht (406) durch die erste Vorrichtung (502) umfasst, oder das Verfahren insbesondere weiter aufweisend wahlweises Übertragen der strahlgeformten Nachricht (408) basierend zumindest teilweise auf einer Anzeige in der zweiten Nachricht (406).

7. Das Verfahren nach Anspruch 1, weiter aufweisend Auswählen der dritten Vorrichtung (509) basierend auf einer Anzahl von Antennen der dritten Vorrichtung (509), insbesondere wobei das Auswählen der dritten Vorrichtung weiter umfasst ein Auswählen der dritten Vorrichtung (509) basierend auf einem Pfadverlust von der ersten Vorrichtung (502) zu der dritten Vorrichtung (509), oder insbesondere wobei das Auswählen der dritten Vorrichtung (509) ein Auswählen der dritten Vorrichtung (509) umfasst basierend auf der dritten Vorrichtung (509) mit ausreichend Antennen zum Generieren eines strahlgeformten Musters, so dass das strahlgeformte Muster Interferenzauslöschung bei der ersten Vorrichtung (502) durchführt während des Empfangs der strahlgeformten Nachricht (408).

8. Eine Vorrichtung zur drahtlosen Kommunikation, aufweisend:
Mittel zum Empfangen einer ersten Nachricht (402) von einer ersten Vorrichtung (502), wobei die erste Nachricht (402) die Übertragung einer zweiten Nachricht (406) von der ersten Vorrichtung (502) zu einer zweiten Vorrichtung (504) anzeigt;
Mittel zum Empfangen einer dritten Nachricht (404) von der zweiten Vorrichtung (504), wobei die dritte Nachricht (404) Trainingsinformation umfasst zum Bestimmen eines Kommunikationskanals bei der zweiten Vorrichtung (504);
Mittel zum Generieren einer strahlgeformten Nachricht (408) zur Übertragung basierend zumindest teilweise auf der Trainingsinformation, so dass die Übertragung der strahlgeformten Nachricht (408) Interferenzauslöschung bei der zweiten Vorrichtung (504) durchführt; und
Mittel zum Planen einer Übertragung der strahlgeformten Nachricht (408) zu einer dritten Vorrichtung (509) gleichzeitig mit der Übertragung der zweiten Nachricht (406).

9. Die Vorrichtung nach Anspruch 8, wobei die vielzähligen Mittel ausgebildet sind mit:
einem Empfänger, eingerichtet zum Empfangen einer ersten Nachricht (402) von einer ersten Vorrichtung (502), wobei die erste Nachricht (402) eine Übertragung einer zweiten Nachricht (406) von der ersten Vorrichtung zu einer zweiten Vorrichtung (504) anzeigt, wobei der Empfänger weiter eingerichtet ist zum Empfangen einer dritten Nachricht (404) von der zweiten Vorrichtung (504), wobei die dritte Nachricht (404) Trainingsinformationen umfasst zum Bestimmen eines Kommunikationskanals bei der zweiten Vorrichtung (504); und
ein Prozessor eingerichtet zum Generieren einer strahlgeformten Nachricht (408) zur Übertragung basierend zumindest teilweise auf der Trainingsinformation, sodass die Übertragung der strahlgeformten Nachricht (408) Interferenzauslöschung bei der zweiten Vorrichtung (504) durchführt, wobei der Prozessor weiter eingerichtet ist zum Planen einer Übertragung der strahlgeformten Nachricht (408) zu einer dritten Vorrichtung (509) gleichzeitig mit der Übertragung der zweiten Nachricht (406).

10. Die Vorrichtung nach Anspruch 9, wobei der Prozessor weiter eingerichtet ist zum Planen der strahlgeformten Nachricht (408), so dass die strahlgeformte Nachricht (408) ihre Übertragung zu der gleichen Zeit beendet wie die dritte Nachricht (404), oder wobei der Sender weiter eingerichtet ist zum wahlweisen Senden der strahlgeformten Nachricht (408) basierend zumindest teilweise auf einer Anzeige in der zweiten Nachricht (406).

11. Das Verfahren nach Anspruch 1 oder die Vorrichtung nach Anspruch 9, wobei die erste Nachricht (402) weiter eine Anzahl von räumlichen Strömen für die Übertragung der zweiten Nachricht (406) anzeigt, insbesondere weiter aufweisend ein wahlweises Übertragen der strahlgeformten Nachricht (408) basierend zumindest teilweise auf der Anzahl von räumlichen Strömen für die Übertragung der zweiten Nachricht (406).

12. Die Vorrichtung nach Anspruch 9, wobei die erste Nachricht (402) zumindest einen Sender in einer Kommunikationsverbindung anzeigt zum Erzeugen der strahlgeformten Nachricht (408), oder wobei der Prozessor weiter eingerichtet ist zum Planen einer Übertragung der strahlgeformten Nachricht (408) nach einem Präambel-Teil der zweiten Nachricht (406).

13. Die Vorrichtung nach Anspruch 9, weiter aufweisend einen Sender eingerichtet zum Senden einer vierten Nachricht, wobei die vierte Nachricht Trainingsinformationen umfasst zum Abschätzen eines Signal-zu-Interferenz-plus-Rauschen-Verhältnis, SINR, pro räumlichen Strom entsprechender Übertragungsrate, und wobei der Empfänger weiter eingerichtet ist zum Empfangen einer fünften Nachricht von der dritten Vorrichtung (509) in Antwort auf die vierte Nachricht, wobei die fünfte Nachricht ein geschätztes SINR und Übertragungsrate umfasst, die Vorrichtung insbesondere wobei der Empfänger weiter eingerichtet ist zum Empfangen einer sechsten Nachricht von der zweiten Vorrichtung (504), wobei die sechste Nachricht auf der ersten und vierten Nachricht basiert und ein geschätztes SINR und Übertragungsrate für die Übertragung von der zweiten Nachricht (406) durch die erste Vorrichtung (502) umfasst.

14. Die Vorrichtung nach Anspruch 9, wobei der Prozessor weiter eingerichtet ist zum Auswählen der dritten Vorrichtung (509) basierend auf einer Anzahl von Antennen der dritten Vorrichtung (509), insbesondere wobei der Prozessor weiter eingerichtet ist zum Auswählen der dritten Vorrichtung (509) basierend auf einem Pfadverlust von der ersten Vorrichtung (502) zu der dritten Vorrichtung (509), oder insbesondere wobei der Prozessor weiter eingerichtet ist zum Auswählen der dritten Vorrichtung (509) basierend auf der dritten Vorrichtung (509) mit ausreichend Antennen zum Generieren eines strahlgeformten Musters, so dass das strahlgeformte Muster Interferenzauslöschung bei der ersten Vorrichtung (502) durchführt während des Empfangs der strahlgeformten Nachricht (408).

15. Ein Computerprogramm aufweisend Instruktionen zum Durchführen eines Verfahrens gemäß einem der Ansprüche 1-7.

## Revendications

1. Procédé de communication sans fil, comprenant :
la réception, au niveau d'un point d'accès (104, 204), d'un premier message (402) en provenance d'un premier dispositif (502), le premier message (402) indiquant une émission d'un deuxième message (406) du premier dispositif (502) à un deuxième dispositif (504) ;
la réception, au niveau du point d'accès (104, 204), d'un troisième message (404) en provenance du deuxième dispositif (504), le troisième message (404) comprenant des informations d'apprentissage pour déterminer un canal de communication au niveau du deuxième dispositif (504) ; la génération, au niveau du point d'accès (104, 204), d'un message à formation de faisceau (408) pour une émission sur la base au moins en partie des informations d'apprentissage de sorte que l'émission du message à formation de faisceau (408) réalise une annulation d'interférences au niveau du deuxième dispositif (504) ; et
la planification d'une émission du message à formation de faisceau (408) du point d'accès (104, 204) à un troisième dispositif (509) simultanément à l'émission du deuxième message (406).

2. Procédé selon la revendication 1, dans lequel le message à formation de faisceau (408) comprend une unité de données de couche physique, PPDU,
ou le procédé comprenant en outre l'émission du message à formation de faisceau (408) par le biais de deux antennes ou plus.

3. Procédé selon la revendication 1, dans lequel la planification d'une émission du message à formation de faisceau (408) comprend la planification du message à formation de faisceau (408) de sorte que le message à formation de faisceau (408) termine son émission en même temps que le troisième message (404).

4. Procédé selon la revendication 1, dans lequel le premier message (402) indique en outre au moins un émetteur en liaison de communication pour générer le message à formation de faisceau (408),
en particulier dans lequel le premier message (402) indique en outre un récepteur correspondant à chaque émetteur indiqué dans la liaison de communication.

5. Procédé selon la revendication 1, dans lequel le premier message (402) peut être envoyé via un accès multiple avec écoute de porteuse, CSMA, ou suite à un message précédent envoyé par le premier dispositif (502) via un CSMA,
ou dans lequel la planification d'une émission du message à formation de faisceau (408) comprend la planification d'une émission du message à formation de faisceau (408) après une partie de préambule du deuxième message (406).

6. Procédé selon la revendication 1, comprenant en outre :
l'émission d'un quatrième message, le quatrième message comprenant des informations d'apprentissage pour estimer un rapport signal sur interférences plus bruit, SINR, par flux continu spatial correspondant à un débit d'émission ; et
la réception d'un cinquième message en provenance du troisième dispositif (509) en réponse au quatrième message, le cinquième message comprenant un SINR estimé et un débit d'émission, le procédé en particulier comprenant en outre la réception d'un sixième message en provenance du deuxième dispositif (504), le sixième message basé sur les premier et quatrième messages et comprenant un SINR estimé et un débit d'émission pour l'émission du deuxième message (406) par le premier dispositif (502),
ou le procédé en particulier comprenant en outre l'émission de manière sélective du message à formation de faisceau (408) sur la base au moins en partie d'une indication dans le deuxième message (406).

7. Procédé selon la revendication 1, comprenant en outre la sélection du troisième dispositif (509) sur la base d'un nombre d'antennes du troisième dispositif (509),
en particulier dans lequel la sélection du troisième dispositif comprend en outre la sélection du troisième dispositif (509) sur la base d'un affaiblissement de trajet du premier dispositif (502) au troisième dispositif (509), ou en particulier dans lequel la sélection du troisième dispositif (509) comprend la sélection du troisième dispositif (509) sur la base du fait que le troisième dispositif (509) ait assez d'antennes pour générer un modèle de formation de faisceau de sorte que le modèle de formation de faisceau réalise une annulation d'interférences au niveau du premier dispositif (502) durant la réception du message à formation de faisceau (408).

8. Appareil de communication sans fil, comprenant :
un moyen pour recevoir un premier message (402) en provenance d'un premier dispositif (502), le premier message (402) indiquant une émission d'un deuxième message (406) du premier dispositif (502) à un deuxième dispositif (504) ;
un moyen pour recevoir un troisième message (404) en provenance du deuxième dispositif (504), le troisième message (404) comprenant des informations d'apprentissage pour déterminer un canal de communication au niveau du deuxième dispositif (504) ;
un moyen pour générer un message à formation de faisceau (408) pour une émission sur la base au moins en partie des informations d'apprentissage de sorte que l'émission du message à formation de faisceau (408) réalise une annulation d'interférences au niveau du deuxième dispositif (504) ; et
un moyen pour planifier une émission du message à formation de faisceau (408) à un troisième dispositif (509) simultanément à l'émission du deuxième message (406) .

9. Appareil selon la revendication 8, dans lequel les divers moyens sont mis en oeuvre à l'intérieur de :
un récepteur configuré pour recevoir un premier message (402) en provenance d'un premier dispositif (502), le premier message (402) indiquant une émission d'un deuxième message (406) du premier dispositif à un deuxième dispositif (504), le récepteur en outre configuré pour recevoir un troisième message (404) en provenance du deuxième dispositif (504), le troisième message (404) comprenant des informations d'apprentissage pour déterminer un canal de communication au niveau du deuxième dispositif (504) ; et
un processeur configuré pour générer un message à formation de faisceau (408) pour une émission sur la base au moins en partie des informations d'apprentissage de sorte qu'une émission du message à formation de faisceau (408) réalise une annulation d'interférences au niveau du deuxième dispositif (504), le processeur en outre configuré pour planifier une émission du message à formation de faisceau (408) à un troisième dispositif (509) simultanément à l'émission du deuxième message (406) .

10. Appareil selon la revendication 9, dans lequel le processeur est en outre configuré pour
planifier le message à formation de faisceau (408) de sorte qu'un message à formation de faisceau (408) termine son émission en même temps que le troisième message (404), ou dans lequel l'émetteur est en outre configuré pour émettre de manière sélective le message à formation de faisceau (408) sur la base au moins en partie d'une indication dans le deuxième message (406).

11. Procédé selon la revendication 1 ou l'appareil selon la revendication 9, dans lequel le premier message (402) indique en outre un nombre de flux continus spatiaux pour l'émission du deuxième message (406),
en particulier comprenant en outre l'émission de manière sélective du message à formation de faisceau (408) sur la base au moins en partie du nombre de flux continus spatiaux pour l'émission du deuxième message (406).

12. Appareil selon la revendication 9, dans lequel le premier message (402) indique en outre au moins un émetteur dans une liaison de communication pour la génération du message à formation de faisceau (408),
ou dans lequel le processeur est en outre configuré pour planifier une émission du message à formation de faisceau (408) après une partie de préambule du deuxième message (406) .

13. Appareil selon la revendication 9, comprenant en outre un émetteur configuré pour émettre un quatrième message, le quatrième message comprenant des informations d'apprentissage pour estimer un rapport signal sur interférences plus bruit, SINR, par flux continu spatial correspondant à un débit d'émission, et
dans lequel le récepteur est en outre configuré pour recevoir un cinquième message en provenance du troisième dispositif (509) en réponse au quatrième message, le cinquième message comprenant un SINR estimé et un débit d'émission,
l'appareil en particulier dans lequel le récepteur est en outre configuré pour recevoir un sixième message en provenance du deuxième dispositif (504), le sixième message basé sur les premier et quatrième messages et comprenant un SINR estimé et un débit d'émission pour l'émission du deuxième message (406) par le premier dispositif (502).

14. Appareil selon la revendication 9, dans lequel le processeur est en outre configuré pour sélectionner le troisième dispositif (509) sur la base d'un nombre d'antennes du troisième dispositif (509), en particulier dans lequel le processeur est en outre configuré pour sélectionner le troisième dispositif (509) sur la base d'un affaiblissement de trajet du premier dispositif (502) au troisième dispositif (509), ou en particulier dans lequel le processeur est en outre configuré pour sélectionner le troisième dispositif (509) sur la base du fait que le troisième dispositif (509) ait assez d'antennes pour générer un modèle de formation de faisceau de sorte que le modèle de formation de faisceau réalise une annulation d'interférences au niveau du premier dispositif (502) durant une réception du message à formation de faisceau (408).

15. Programme d'ordinateur comprenant des instructions pour réaliser un procédé selon l'une quelconque des revendications 1 à 7.
